# EUROPEAN PATENT SPECIFICATION

(11) **EP 2 691 161 B1**
(45) Date of publication and mention of the grant of the patent: **27.09.2017**
(21) Application number: 12720922.9
(22) Date of filing: 30.03.2012
(51) Int. Cl.: B01D 46/00, D21F 5/18

(54) **A CLEANING DEVICE UNIT FOR CLEANING A FILTER SURFACE OF A FAN TOWER OF A PULP DRYER AND A PULP DRYER**
REINIGUNGSVORRICHTUNG ZUM REINIGEN EINER FILTERFLÄCHE EINES LÜFTERTURM EINES ZELLSTOFFTROCKNERS UND ZELLSTOFFTROCKNER
UNITÉ DE DISPOSITIF DE NETTOYAGE POUR NETTOYER LA SURFACE D'UN FILTRE D'UNE TOUR DE VENTILATION DE SÉCHEUR DE PÂTE ET SÉCHEUR DE PÂTE

(30) Priority: 31.03.2011 FI 20115309
(43) Date of publication of application: 05.02.2014
(73) Proprietor: Valmet Technologies, Inc., 02150 Espoo (FI)
(72) Inventor: LINDHOLM, Johan, FI-20810 Turku (FI)
(74) Representative: Berggren Oy, Turku
(86) International application number: PCT/FI2012/050321
(87) International publication number: WO 2012/131169

(56) References cited:
- EP-A1- 0 497 732
- WO-A1-01/34905
- WO-A1-2005/124017
- DE-A1- 4 223 842
- US-A- 4 277 264

## Description

The invention relates to a cleaning device unit for cleaning a filter surface of a fan tower of a pulp dryer and a pulp dryer according to the preambles of the independent claims presented below.

### FIELD OF THE INVENTION

A typical prior art pulp dryer comprises
- an actual drying section, in which a pulp web is dried in air flotation drying with hot air blows or the like,
- at least one, usually several recirculation fans fitted adjacent to the actual drying section, with which recirculation fans moist air is removed from the actual drying section, and with which heated air is blown as drying air into the actual drying section, and
- heating devices, with which the removed moist air is heated before it is returned as drying air into the actual drying section.

Several fans are usually arranged on top of each other to form so-called fan towers. A sufficient number of fan towers are in turn arranged adjacently at a distance from each other. The fans are installed in the fan tower so that their suction openings are confined to the front and back side of the fan tower, seen in the running direction of the web to be dried. Heating devices, such as heat exchangers or steam radiators, are arranged on the front and back sides of the fan towers, in front of the suction openings of the fans, which heating devices heat the air entering the drying section. The air is thus transferred to the fan through a heating device, from the entry side of the heating device to the exit side. With the aid of the fan the air is blown as drying air into the actual drying section.

In front of the heating devices, i.e. on their entry side, there is usually arranged a filter net or the like to prevent shredded paper, fibres, dust or the like from entering into the heating device and further into the fan. Dust remains attached to the filter net, i.e. the filter surface, which thus has to be cleaned every now and then.

Nowadays cleaning of the filter nets of the pulp dryer's heating devices, such as steam radiators, takes place manually with a dust suction apparatus. The cleaning takes place at least a few times per week, in practice most often every day. The person operating the dust suction apparatus must then, at least partly, enter the space between the fan towers, where the temperature is high, even over 100 °C, and where the air humidity is high. The dust suction is usually performed with a dust suction duct, which has a nozzle at its end and which is connected to a central vacuum system at the mill. The nozzle is moved manually on the surface of the net filter to be cleaned. The work is hard, very unpleasant and unergonomic.

Due to the reasons stated above, it is difficult to perform the dust suction with sufficient care, and it is also not always done often enough. When dust suctioning by hand, it is also difficult to reach for example behind steam pipes, support elements, beams or the like. Hot steam and condensate pipes also constitute an occupational safety risk when working in the cramped space between fan towers. Inadequate dust suction causes an increase of pressure loss and a reduction in the amount of air in the recirculation fans. This leads in the dryer section to an impaired air flotation of the pulp web and to runnability problems, whereby the production of the pulp dryer decreases.

Publication WO 2005/124017 describes a device and a method for cleaning a filter net of a fan tower of a pulp dryer, a fan tower of a pulp dryer and a pulp dryer. The cleaning device comprises one or more nozzles, one or more connections for leading an underpressure to the nozzle, at least mainly immobile guiding means arranged in connection to the filter net, to which guiding means the nozzle is connected in a moveable manner, and power means for moving the nozzle in relation to the guiding means. Even though the device of the publication WO 2005/124017 significantly improves the cleaning of the filter net in comparison to a fully manual dust suction, it does not necessarily in all circumstances provide an optimal cleaning result. The disclosed solution also needs its own apparatus for each filter net, which increases costs.

WO 01/34905 discloses a device for a pulp dryer with warm air as drying medium. The intention us to arrange automatic cleaning of net filters in the pulp dryer. Different filter cleaning arrangements have been disclosed also in US 4,277,264, DE 42 23 842 and EP 0497732.

### OBJECT AND DESCRIPTION OF THE INVENTION

An object of the present invention is to reduce or even eliminate the above-mentioned problems appearing in the prior art.

An object of the present invention is especially to provide a solution, with which the cleaning and maintenance of fan towers of a pulp dryer may be made easier and quicker.

Another object of the present invention is to provide a cleaning device unit with which the quality of the cleaning of fan towers of a pulp dryer can further be improved.

Still another object of the present invention is to provide an automatic or nearly automatic cleaning of the fan towers of a pulp dryer.

In order to realize the above-mentioned objects the invention is characterised by what is presented in the characterising parts of the enclosed independent claims.

The embodiments and advantages mentioned in this text relate, when applicable, to the cleaning device unit and pulp dryer according to the invention, even though they are not always specifically mentioned.

A typical cleaning device unit according to the invention for cleaning a vertically immovable vertical filter surface of a filter net of a pulp dryer's fan tower, which cleaning device unit comprises - movement means for moving a cleaning module along the immovable filter surface.

The cleaning module comprises
- a blow part, which is arranged to blow air to the filter surface to be cleaned, and
- a suction part, which is arranged in horizontal direction at a distance from the blow part, and which suction part is arranged to suck air from the filter surface to be cleaned,
where the blow part is arranged to blow through the filter net towards the suction part.

The cleaning device unit comprises a movable encased base unit, into which is arranged one or more of the following:
- a suction device,
- a blow device,
- at least one hose reel for suction and/or supply air connections, which are to be arranged in contact with the cleaning module,
- a power source, such as a motor, for moving the cleaning module along the filter surface to be cleaned,
- a waste space, preferably arranged inside the hose reel,
- connection guides, by means of which the suction and/or supply air connections are arranged around the hose reel, and/or
- a cable reel (12).

The cleaning device unit comprises transfer means arranged in connection with the base unit for moving the cleaning device unit from one fan tower to a second fan tower.

A typical pulp dryer according to the invention comprises
- an actual drying section, in which a pulp web is arranged to be dried with hot air blows or the like,
- at least one fan tower arranged adjacent to the actual drying section, which fan tower comprises
   - at least one fan, which is arranged to remove moist air from the drying section of the pulp dryer and to blow heated air into the drying section of the pulp dryer,
   - at least one heating device, such as a heat exchanger, a steam radiator or the like, which is arranged on the suction side of said fan,
   - an immovable filter surface, which is formed from filter net or the like arranged on the side of the heating device which faces away from the fan, for protecting the heating device and for filtering the air to be heated before it is led to the heating device,
whereby the pulp dryer comprises a cleaning device unit according to the invention.

The invention may be used in a method for cleaning a filter surface of a fan tower of a pulp dryer, which method comprises
- moving a cleaning module of a cleaning device unit along a filter surface, and removing loose matter attached to the filter surface of the fan tower,
- blowing air with a blow part of the cleaning module from a second side of the filter surface to be cleaned to a first side, and
- sucking air and loose matter attached to the filter surface from the first side of the filter surface to be cleaned with a suction part of the cleaning module, which is arranged in horizontal direction at a distance from the blow part.

Now it has surprisingly been found that by arranging both a suction part and a blow part in the cleaning module of the cleaning device unit, the surface of the filter net of the fan tower can be cleaned even more efficiently than before. The blow part may be arranged to blow through the filter net towards the suction nozzles of the suction part, whereby loose matter, dust, loose fibres and the like, attached to the surface of the filter net, can be removed more carefully, efficiently, quickly and reliably than before.

The suction part of the cleaning module usually cleans the surface of the filter net in a contact-free manner, i.e. no brushes or other corresponding means are arranged in the suction part for cleaning the filter net. The suction part is usually arranged close to the filter net, typically at a distance of about 5-50 mm, more typically at a distance of 5-30 mm from the surface of the filter net. With the aid of the suction part, loose matter and the like attached to the filter net can be sucked from the filter net, particularly from its surface.

In one embodiment of the invention the suction part of the cleaning module of the cleaning device unit comprises one or several adjacent suction nozzles. The suction nozzle may comprise an elongated suction gap, which is arranged to be substantially horizontal, i.e. rectilinear to the width direction of the filter net. If the suction part comprises several suction nozzles, they are preferably arranged in a row, so that the suction openings or suction gaps of individual nozzles form a suction zone extending in the width direction of the filter surface from its first side edge to the second side edge. The suction nozzles of the suction part of the cleaning module are preferably arranged to be on the side of the filter surface which faces away from the heating device and to suck the filter surface.

The suction nozzle or adjacent suction nozzles of the suction part of the cleaning module are typically arranged into a contact with a suction system with a suction connection/connections, such as a suction hose. In one embodiment the suction part of the cleaning module comprises at least two adjacent suction nozzles, which are arranged with one branching suction connection into contact with the suction system, the suction connection branches being optionally different from each other with regards to their diameter. When the suction part of the cleaning module comprises two or several suction nozzles, they may be arranged into contact with the suction system with one branching suction connection. To the suction system is thus connected one suction connection, which branches off at a suitable point into several separate suction connection branches, each of which is connected to its own suction nozzle. A separate distribution piece, whereto individual suction connection branches are connected, may also be arranged in that end of the suction connection, which is in contact with the suction system. The suction connection branches may be different from each other, for example their diameter may differ from each other. Thus the suction effect in different suction nozzles of the suction part of the cleaning module may be controlled. Each individual suction nozzle may also be arranged into contact with the suction system with its own suction connection. This embodiment is especially suitable for use when the suction part of the cleaning module comprises two adjacently arranged gap suction nozzles, both of which are connected to the suction system with their own suction connection.

In case the suction part of the cleaning module comprises at least two or more adjacently arranged suction nozzles, the suction nozzles may in one embodiment of the invention be arranged to suck the filter net alternately or non-simultaneously. For example, if the suction capacity of the suction system is limited, the first suction nozzle of the suction part may be used to suck the surface of the filter net clean when the suction part of the cleaning module is moved along the filter surface from the first end to the second end. During this time the suction part's second suction nozzle, which is arranged to be parallel to the first suction nozzle, is not sucking. When the second end of the filter surface is reached, and the direction of movement of the suction part is reversed from the second end to the first end, the suction through the first suction nozzle of the suction part is terminated and suction through the second suction nozzle of the suction part is begun. The change of the suction nozzle may be carried out, for example, by using a turning valve, for example a flap valve, with the aid of which the suction may be reversed from the suction connection or suction connection branch of the first suction nozzle to the suction connection or suction connection branch of the second suction nozzle. The turning valve may be arranged in a location where individual suction connections attach to the suction system, or it may be arranged in contact with the distribution piece.

The central vacuum system of a pulp mill may for example function as the suction system. In that case, a hose connection may be arranged between the fan towers of the pulp dryer, to which hose connection the suction connection/connections of the suction nozzle/nozzles of the suction part are connected. When the cleaning module of the cleaning device unit is not in use, the suction part may be detached from the hose connection, and the cleaning device unit may be transferred to the subsequent space between fan towers, where the suction part of the cleaning module is connected to another corresponding hose connection therein. In this embodiment every space between fan towers is preferably provided with its own hose connection, which is connected to the central vacuum system, for the suction part of the cleaning module and its nozzles.

The suction system of the cleaning device unit may also be a separate suction device, which is arranged integral to the cleaning device unit in a fixed manner and transferred together with the cleaning device unit. This embodiment decreases the number of ducts and hoses in the space between the fan towers.

A shredding member may also be arranged inside the suction part of the cleaning module, for example a cogged rotating blade wheel functioning as a shredding fan, for intensifying the air flow and for breaking up sucked large loose matter agglomerates. The shredding member is arranged in the suction part for example after the nozzle opening or gap of the suction nozzle, before the intersection to the suction connection. With the aid of the shredding member the progress of loose matter sucked with the suction nozzle to the suction connection and the flow of air to the suction connection may be improved, and simultaneously possible large sucked loose matter agglomerates, for example pulp shreds or fibre bundles may be broken. The suction part may also be formed so that a waste space is arranged beneath the shredding member and the nozzle opening or gap of the suction nozzle, into which waste space heavier sucked loose matter may progress. The waste space may easily be emptied, through a discharge hatch arranged in the suction part, for example in its lower surface, which hatch can be opened and closed.

In one embodiment of the invention the blow part of the cleaning module of the cleaning device unit comprises one or several adjacent blow nozzles, which are arranged into contact with a supply air system with a supply air connection/connections. The blow nozzle may comprise an elongated blow gap, which is arranged to be substantially horizontal, i.e. parallel to the width direction of the filter net. If the blow part comprises several blow nozzles, they are preferably arranged in a row, so that the blow openings or blow gaps of individual nozzles form a blow zone extending in the width direction of the filter surface from its first side edge to the second side edge. The blow part of the cleaning module of the cleaning device unit is typically arranged to travel in a space between the filter surface and a heating device and to blow towards the filter surface. Thus the blow nozzles may be protected from blockage. In case the suction part of the cleaning module is arranged simultaneously to travel on that side of the filter surface which faces away from the heating device and to suck the filter surface, then the cleaning of the filter surface may thus be performed efficiently. For example preheated or unheated air, such as compressed air, may be blown with the blow part through the filter surface, and dust detached by the blow may simultaneously be sucked from the filter surface with the suction part on the other side of the filter surface.

The blow nozzle/nozzles of the blow part may also be arranged to be turnable. The blow nozzle/nozzles of the blow part are arranged to be turnable, whereby they are turned to blow away from the filter surface toward the heating device, for cleaning the heating device. Thus the blow nozzle/nozzles of the blow part may be turned 180 degrees to blow away from the filter surface towards the heating device, whereby blow air, such as compressed air or another corresponding gas, may be blown toward the heating device for cleaning it. The blow nozzles of the blow part may blow air toward the heating device either during an actual cleaning procedure or during the time between actual cleaning procedures. It is also possible that a first section of the blow nozzles of the blow part is arranged to blow air toward the heating device and at the same time a second section is arranged to blow air to the filter surface to be cleaned.

Non-pressurised air or compressed air may be used as the blow air. For example compressed air, which may have pressure in the range of 1-6 bar, preferably 2-4 bar, may be supplied to the blow nozzles of the blow part of the cleaning module. The supplied air may be for example preheated or unheated air from the machine room. The pulp mill's own main system for compressed air may, for example, function as the supply air system. The cleaning device unit may also be provided with a blow device for providing supply air, for example a side channel fan, or another corresponding blow device or compressed air device, which is transferred together with the cleaning device unit. Thus the cleaning device unit does not need to be in contact with the fixed main systems of the mill, but the cleaning device unit may be freely transferred in the mill from one filter surface to be cleaned to another, preferably subsequent, filter surface to be cleaned.

In one embodiment the blow part of the cleaning module comprises at least two blow nozzles, which are arranged with one branching supply air connection into contact with the supply air system, the supply air connection branches being optionally different from each other with regards to their diameter. In case the blow part of the cleaning module comprises several blow nozzles, they may be arranged in contact with the supply air system with one branching supply air connection. In that case one supply air connection, such as a blow hose, is connected to the supply air system, which connection branches off at a suitable point into several separate supply air connection branches, which are connected to the air distribution member of the blow nozzles. A separate distribution piece, whereto individual supply air connection branches are connected, may also be arranged in that end of the supply air connection, which is in contact with the supply air system. The supply air connection branches may be different from each other, for example their diameter may differ from each other. Thus the blow effect in different blow nozzles of the blow part of the cleaning module may be controlled. Individual blow nozzles may also be arranged into contact with the supply air system with their own separate supply air connections, such as blow hoses. This embodiment is especially suitable for use when the blow part of the cleaning module comprises two adjacently arranged blow nozzles, both of which are connected to the supply air system with their own supply air connection.

The distance between the blow part and the suction part in the cleaning module is typically 10-110 mm, even more typically 10-70 mm.

In one embodiment of the invention the suction side and the blow side of the cleaning module are arranged in contact with each other. The suction of the suction part and the blow of the blow part may be arranged in balance with each other, so that air sucked with the suction part is used as blow air for the blow part. Air sucked from the first side of the filter surface with the suction part of the cleaning module is thus led to the blow part of the cleaning module as blow air. The cleaning device unit comprises in that case the necessary means for creating and maintaining air circulation between the suction part and the blow part, for example a pump, a fan, such as a side channel fan or the like. In that case the cleaning device unit is also preferably provided with an air cleaning means for cleaning the air between the suction part and the blow part. For example a filter, such as a cassette filter, for example an automatically cleaned cassette filter, or another corresponding filter arrangement may function as the air cleaning means.

The suction part and the blow part of the cleaning module typically have the same length, and they extend in the horizontal direction from the first edge of the filter net of the fan tower to the second edge. Typically the total length of the suction part and the blow part of the cleaning module is 1-3 m, more typically 1.2-2.5 m, most typically 1.3-2 m. This length is usually also the length of the cleaning module.

In one embodiment the blow and the suction are performed simultaneously at the same location while the suction and blow parts are opposite each other. The blow part and suction part of the cleaning module are arranged in fixed contact with each other, so that the suction part and blow part are arranged to be opposite and parallel at a distance from each other and attached to each other. For example, the cleaning module of the cleaning device unit may comprise an elongated suction part, which comprises several suction nozzles arranged in a row, and an elongated blow part, which comprises several blow nozzles arranged in a row, whereby the suction part and the blow part are arranged parallel and opposite to each other at a distance from each other and attached to each other.

In one preferred embodiment of the invention the blow part and suction part of the cleaning module are separate from each other, and the blow part and suction part have both been provided with their own movement means for moving them independently from each other along the filter surface. This means that the blow part and the suction part are not connected to each other in a fixed manner opposite each other, but they may be moved freely, independently from each other, along the filter surface in vertical direction. For example, first the blow part may be moved along the filter surface, between the filter surface and the heating device, whereby the blow part blows loose matter attached to the filter net to the outer surface of the filter net. The blow part thus travels from the first end of the filter surface to the second end, and possibly also back. After the blowing, the suction part is moved along the filter surface on the outer surface of the filter net, on the side which faces away from the heating device, and the suction part sucks away from the filter surface loose matter conveyed to the outer surface and/or loosened by the blow.

The cleaning device unit may comprise a movable base unit, wherein other parts of the cleaning device unit may be arranged in a compact manner for facilitating their transfer from one fan tower to another. The cleaning device unit may comprise transfer means arranged in connection with the base unit for transferring the cleaning device unit from one fan tower to a second fan tower. The base unit may be arranged for example as an encased unit, in the bottom of the outer casing of which wheels, rollers or other corresponding members have been arranged as transfer means for making it easier to transfer the unit. If needed, the outer casing of the base unit may also be provided with one or more push members, such as a handle or the like for making it easier to transfer the base unit. The base unit may, if necessary, also be transferred with a hand truck or the like.

According to one embodiment of the invention the base unit and cleaning module of the cleaning device unit are freely movable in relation to each other, even if they are arranged in fixed functional contact with each other. It is for example conceivable that they are arranged to move along their own independent tracks for cleaning the fan towers.

According to one embodiment of the invention the cleaning device unit comprises at least one hose reel, around which the suction and/or supply air connection/connections, which are to be arranged in contact with the cleaning module may be reeled when the cleaning device unit is in the transfer position, for transferring it from the first fan tower to the subsequent fan tower. The hose reel is preferably arranged in the base unit, inside its outer casing. In the transfer position the suction and/or supply air connection/connections of the cleaning device unit are reeled onto the hose reel in the base unit and the cleaning module is preferably arranged in connection with the base unit, for example attached in a detachable manner to its side. The reeling of the connections inside the outer casing of the base unit decreases or completely prevents tangling of the connections and makes working with the cleaning device unit easier. While on the reel, the connections also do not become dirty in the dusty environment around the pulp dryer. There may be, if needed, several hose reels, so that the suction connections are reeled onto a first hose reel and the supply air connections onto a second hose reel, or so that each suction and supply air connection is provided with its own hose reel.

According to one embodiment connection guides are arranged in contact with the hose reel arranged in the base unit of the cleaning device unit, which connection guides are used to ensure that the suction and/or supply air connections, such as hoses, are arranged around the hose reel in a desired manner. Thus an easy and efficient reeling of the suction and/or supply air connections, as well as a correct tightness of the connections both when reeling off and reeling in is provided.

The cleaning device unit may also comprise a waste space, where the loose matter, loose fibres, dust and trash removed from the filter surface by suction is collected. The waste space may be arranged, for example, inside the hose reel arranged in the base unit. The waste space arranged in the cleaning device unit may be emptied manually or automatically. The emptying of the waste space may take place at regular intervals or as needed. For example, a sensor may be arranged in the waste space, which sensor gives an automatic alarm to a process operator when the waste space becomes full. A signal given by the sensor may also launch an automatic, pre-programmed discharge process of the waste space.

The cleaning device unit typically comprises, in addition to the cleaning module, movement means for moving the cleaning module along the filter surface. In a preferred embodiment of the invention the cleaning device unit is arranged to function from the roof of the pulp dryer, the cleaning of the filter surface of the fan tower taking place downwards from the top. The cleaning of the filter surface is thus performed from the upper part of the fan tower toward the lower part of the fan tower. In this case the movement means of the cleaning module typically comprise at least one cable wire member, hanging on which the cleaning module, or the suction part and blow part of the cleaning module may be moved in the vertical direction along the filter surface to be cleaned. If the blow and suction parts of the cleaning module are arranged in fixed contact with each other, the cleaning module is moved along the filter surface from the top with the aid of and hanging on the cable wire member. If the blow part and the suction part of the cleaning module are separate from each other, and freely separately movable in the vertical direction along the filter surface, both the blow part of the cleaning module and the suction part of the cleaning module are provided with their own separate cable wire members for moving them both independently from each other. The cable wire members may be reeled onto one or several cable reels arranged inside the outer casing of the base unit of the cleaning device unit, depending on the number of cable wire members forming the movement means.

In a preferred embodiment of the invention, where the cleaning device unit is arranged to function from the roof of the pulp dryer, the cleaning module may comprise one or several guide members, such as wheel means, for example a guiding wheel. The guide members, such as the wheel means, are arranged to travel along a fixed guiding means, for example a guide rail or a guide groove, attached in contact with the filter net. One or several guide members may be arranged in either or both of the side edges of the cleaning module.

In an embodiment, where the blow part and the suction part of the cleaning module are arranged in fixed contact with each other, parallel to each other and at a distance from each other on opposite sides of the filter surface, one or more wheel members, such as cog wheels or guiding wheels, may function as the movement means. The movement means, such as the wheel means, is arranged to travel along a fixed guiding means, for example a cogged guide rail, attached in contact with the filter net. The movement means may be arranged in either side edge of the cleaning module or in the middle of the cleaning module. The movement means may for example be arranged to divide the cleaning module symmetrically into two equally long and large parts.

According to a preferred embodiment of the invention, when the cleaning of the filter surface is performed downwards from the top, the cleaning device unit comprises a first power source, which is preferably placed inside the outer casing of the base unit of the movable cleaning device unit, for moving the cleaning module along the filter surface to be cleaned. The power source may for example be a motor or the like. The power source is preferably placed inside the outer casing of the base unit of the movable cleaning device unit, whereby the power source is protected from fouling. With the aid of the power source the movement means, for example the cable wire members, of the cleaning module or of the blow part and suction part of the cleaning module, may be operated. For example, cable reels, onto which cable wire members are reeled, or other corresponding devices, may be operated with the aid of the power source. Also the hose reel may be operated with the aid of the power source for reeling the suction and/or supply air hoses around the reel. In case there are several hose reels, they may be arranged in a functional contact with one power source, or the hose reel meant for the suction connections may be arranged in a functional contact with a first power source and the hose reel meant for the supply air connections may be arranged in a functional contact with a second power source, or each hose reel may be arranged in a functional contact with its own separate power source, whereby they may be freely used independently from each other.

According to one embodiment of the invention the cleaning device unit comprises an above-described moveable encased base unit, into which is arranged one or several of the following: a suction device; a blow device; at least one hose reel for suction and/or supply air connections, which are to be arranged in contact with the cleaning module; a power source, such as a motor, for moving the cleaning module along the filter surface to be cleaned; a waste space, preferably arranged inside the hose reel; connection guides, by means of which the suction and/or supply air connections are arranged around the hose reel; and/or a cable reel.

In one embodiment of the invention a second power source and/or a braking mechanism has been arranged in contact with the cleaning module for moving the cleaning module along the filter surface. In this case the cleaning module usually comprises a blow part and a suction part which are in fixed contact with each other, and the cleaning module is meant to be operated from the lower part of the fan tower of the pulp dryer toward its upper part. A second power source, which may for example be a motor or the like using compressed air, is arranged or integrated in a fixed manner in the cleaning module. The cleaning module may preferably also comprise a braking mechanism or a braking mechanism may be connected to the second power source in contact with the cleaning module, which braking mechanism makes easier the controlled lowering of the cleaning module downward from the filter surface in the upper part of the fan tower. In the cleaning module the second power source may be arranged on that side of the filter surface which is toward the heating device. Thus easily fouled mechanical parts of the cleaning module may be arranged on the clean side of the filter surface of the filter net, which significantly decreases malfunctions or downtime caused by fouling.

The cleaning module of the cleaning device unit may also comprise additional mechanical cleaning means, for example a brush wheels, which can be used to mechanically detach dust and other dirt from the filter surface, and which makes easier the sucking of dirt and loose matter with the suction nozzles of the suction part. The additional mechanical cleaning means are preferably arranged in contact with the suction part or in its immediate vicinity.

The filter surface in the pulp dryer's fan tower is preferably arranged to extend in the vertical direction continuously at least over the distance of the height of one heating device. Now it has been surprisingly found that making the filter surface on the entry side of the pulp dryer's heating device as continuous as possible, so that it extends over the distance of at least one, preferably two or more, heating devices, the cleaning of the filter surface is made significantly easier. Nowadays empty space and various angles and edges remain between used separate stationary filter nets, wherein dust and other dirt easily is collected in the dusty conditions around the pulp dryer. A continuous filter surface may reduce or even completely eliminate such empty spaces, and decrease the number of angles and edges, which makes also manual cleaning of the filter surface significantly easier.

When the surface area of the filter surface grows, the face velocity of the air to be filtered through the filter surface decreases, whereby the filtering is improved. This makes possible also an embodiment, where a more close-meshed filter net is used than before.

It may thus be conceived that the present solution covers i.e. encases behind one and the same continuous filter surface at least one, preferably two heating devices, which are on one side of the fan tower of the pulp dryer, on top of each other in the vertical direction. One fan, usually two or more, for example three, four, or sometimes even five or six superposed fans may be arranged in contact with one heating device, whereby it is also conceivable that the continuous and vertically immovable filter surface is arranged to extend over all of them. Preferably all heating devices on one side of the fan tower are encased and covered behind one continuous filter surface. Preferably the filter surface of the fan tower is vertically completely immovable, whereby the problems related to the mechanical parts of known rotating filter nets may be avoided.

In one embodiment the filter surface is arranged to extend in the vertical direction continuously at least over the distance of the height of one heating device, and it is formed from several separate filter net modules, which are arranged on top of each other and/or adjacent to each other. By using filter net modules also filter surfaces of different sizes may be easily formed, without having to tailor the filter surface structure separately for each application. It is possible to manufacture filter net modules having one, two or a few predetermined sizes, by combining which a filter surface of a required size may easily be achieved. This is preferable especially when renewing fan towers of old, existing pulp dryers and their service systems. Typically the width of an individual filter net module is 1-2 m, more typically 1.2-1.8 m, most typically 1.3-1.6 m, and its height is 1-5 m, more typically 1-3 m, most typically 1-2 m.

When the filter surface is formed from several separate filter net modules, filter net modules may also be arranged adjacent to each other. The sides of adjacent filter net modules thus come as close to each other as possible, so that the gap between them may be minimised. Typically the gap between two adjacent filter net modules is less than 3 cm, more typically less than 2 cm. Very typically the sides of adjacent filter net modules come into contact with each other. In practice a filter surface formed from separate filter net modules thus forms a continuous large filter surface.

The filter surface, or the filter net modules forming the filter surface, may be attached to necessary mounting structures in a detachable manner, whereby desired sites behind the filter surface may be easily examined.

According to one embodiment of the invention a sealing strip and/or a lead-in strip is arranged between the filter net modules forming the filter surface of the filter net of the fan tower, particularly between adjacent filter net modules. The sealing strip and/or lead-in strip may be manufactured from silicone, Teflon or another corresponding material. The sealing strip and/or lead-in strip prevents a harmful air leakage and the passage of dust and other trash through the gaps and seams between the filter net modules to the heating device.

In one embodiment of the invention guiding means, such as fixed guides, for example rails, for transporting or moving the cleaning module of the cleaning device unit in relation to the filter surface are arranged in a fixed manner in connection with the filter surface. The cleaning module is arrangeable to move along the filter surface along the guiding means.

According to one preferred embodiment of the invention the filter surface is formed by arranging horizontally two filter net modules adjacent to each other as a module level, and then by arranging a necessary number of these module levels vertically on top of each other to form a large planar filter surface. A continuous vertical gap thus runs through the filter surface, which may be sealed with a sealing strip or a lead-in strip. Guiding means, such as a cogged profile, a cogged guide, a guide rail or a guide profile may be arranged in the gap or to the lead-in strip arranged therein, which makes it easier to move the cleaning module of the cleaning device unit in the vertical direction of the filter surface. The movement means of the cleaning module of the cleaning device unit is preferably arranged to travel along a guiding means arranged in the vertical gap, such as a cogged lead-in strip, a sealing strip or a guide. Alternatively the guiding means may be arranged to travel in the vertical direction on the edges of the large planar filter surface.

When a continuous large filter surface is formed by using separate filter net modules, the individual filter net modules may have different size. The vertical sealed gap or seam formed in the large filter surface between filter net modules may be situated in the middle of the large filter surface, or it may be situated on the area between the vertical central line and either of the edges of the filter surface. The large filter surface may also comprise several vertical sealed gaps or seams, which define areas, which may have non-identical and asymmetrical widths. The vertically superposed levels of filter net modules may also have different heights, whereby the distance between the horizontal gaps or seams formed in the large filter surface varies. In case the filter net modules are arranged transversely in the height direction of the fan tower, the filter surface does not necessarily have any vertical sealed gaps or seams, only horizontal sealed gaps or seams. In one embodiment the filter net modules are arranged transversely in the height direction of the fan tower, so that there are also several filter net modules horizontally adjacent to each other, whereby a vertical sealed gap or seam is formed between the adjacent filter net modules.

The distance of the filter surface from the heating device is not necessarily constant. The distance of the filter surface from the heating device may decrease towards the actual drying section of the pulp dryer. The filter surface may thus be arranged in the horizontal direction at an angle in relation to the heating device. The filter surface may be arranged at an angle of 5°-15° in relation to the heating device. The edge part of the filter surface may be arranged at a different level than the main part of the filter surface, i.e. a protruding shoulder is formed in the edge of the filter surface. Both embodiments provide additional space behind the filter surface, between the filter surface and the heating device. Hot steam pipes and/or condensate pipes leading to the heating devices of the fan tower may, if necessary, be placed in this space. Thus said pipes are removed from the cramped work space between the fan towers, whereby work becomes significantly safer, and the risk of burns decreases. At the same time the pipes are hidden on the clean side of the filter surface, which decreases the collection of dust and other trash in the work space between the fan towers. Also the width of the entire pulp dryer may thus be decreased, because no space needs to be reserved for the pipes on the sides of the filter nets any longer, but they may be arranged compactly behind the filter surface.

In another embodiment of the invention the distance of the filter surface from the heating device is constant. Also in this case the filter surface may be arranged sufficiently far from the heating device, so that the hot steam pipes and/or condensate pipes leading to the heating devices of the fan tower may be placed in the space between the filter surface and the heating device. The filter surface or the filter net modules forming the filter surface may be arranged to be completely separate from the heating device, at a distance from the heating device, possibly even transversely.

In one embodiment of the invention the pulp dryer comprises at least a first and a second, preferably several, adjacent fan towers. Transfer guides, such as transfer rails, may be arranged between the fan towers, along which the cleaning device unit is transferrable from the first fan tower to the second fan tower, typically on the outside of the pulp dryer. The cleaning device unit is transferred along the transfer guides, such as transfer rails, to the subsequent fan tower for performing corresponding cleaning steps. The cleaning device unit may thus simply and effortlessly be transferred from one fan tower to another, whereby one cleaning device unit may easily be used for cleaning the filter surface of several fan towers. In one embodiment of the invention all the fan towers on the use and/or maintenance side are arranged in contact with each other through transfer guides, and at least one cleaning device unit is arranged to travel along the transfer guides. The number of cleaning device units used in the pulp dryer is preferably smaller than the number of filter surfaces to be cleaned in the fan towers of the pulp dryer.

In one embodiment of the invention the transfer guides, such as the transfer rails, are arranged on the upper surface, i.e. roof, of the pulp dryer. The transfer guides are arranged to run from the first fan tower to the subsequent fan tower and the cleaning device unit is arranged to travel along them. The cleaning device unit is stopped at the filter surface of a fan tower, and its cleaning module or the suction and/or blow part of its cleaning module is arranged to clean the filter surface downwards from the top. A suitable actuator may be used for transferring the cleaning device unit along the transfer guides or the transfer may be performed by the process operator. The transfer guides may also be arranged to the ceiling of the mill room surrounding the pulp dryer, on the inner surface of the ceiling above the pulp dryer, and the cleaning device unit may be arranged to travel along them and to hang from them.

In another embodiment the transfer guides, such as the transfer rails, may be arranged to the space beneath the lowest maintenance bridge of the pulp dryer. The transfer rails may also be arranged to run on the maintenance bridge. The transfer guides may thus be arranged in contact with the lowest maintenance bridge of the pulp dryer for example by attaching them beneath the maintenance bridge. In one embodiment of the invention the cleaning device unit may be arranged to hang from the maintenance bridge, whereby it hangs on transfer guides, in this case for example cable wires or the like, beneath the maintenance bridge, from where it is guided in the compensation air space between two adjacent fan towers to perform the cleaning steps of the filter surface, when needed.

According to one embodiment of the invention the cleaning device unit may be arranged to be transferred along the transfer guides and automatically to clean the filter surfaces of the pulp dryer continuously or at predetermined time intervals. The cleaning device unit may naturally be transferred by a process operator from one fan tower to the next without automation or transfer guides. The transfer may take place manually for example by carrying or pushing.

Necessary openings may be arranged between the fan towers in the ceiling, wall or floor of the pulp dryer, through which openings the cleaning device unit or the cleaning module of the cleaning device unit may move from the outside of the pulp dryer to between the fan towers to clean the filter surfaces.

The transfer guides may also be arranged to span over an individual fan tower, whereby the cleaning module of the cleaning device unit may be moved from the first side of an individual fan tower to its second side on its upper side. The cleaning module thus advances along the first side of the fan tower from the first end of the fan tower to the second end, for example from the lower part to the upper part, at the same time cleaning the first filter surface on the first side. Then the cleaning module moves to the second side of the fan tower, at the same time cleaning the filter surfaces on the second side. The move may take place for example along transfer guides arranged on the upper surface or roof of the fan tower.

In one embodiment the cleaning module of the cleaning device unit is moved from the first filter surface to be cleaned to the second adjacent filter surface to be cleaned on its lower side. Thus a curved guide is arranged in the base unit of the cleaning device unit, for example a U-shaped guide, the ends of which may be fitted into guiding means arranged in contact with the adjacent filter surfaces. Thus the cleaning module of the cleaning device unit may be moved from the first filter surface to the adjacent filter surface by moving its movement means along a curved guide.

### BRIEF DESCRIPTION OF THE FIGURES

The invention is described in more detail below with reference to the enclosed schematic drawings, in which
- Figure 1: shows a cleaning device unit according to one embodiment of the invention seen from the side,
- Figure 2: shows a cleaning device unit according to one embodiment of the invention seen from the front,
- Figure 3: shows other embodiments of the invention seen from above,
- Figure 4: shows a cleaning device unit according to one embodiment of the invention as a perspective view,
- Figure 5: shows the cleaning device unit according to one embodiment of the invention shown in Figure 4 without the outer casing,
- Figure 6: shows the cleaning module of a cleaning device unit according to one embodiment of the invention as a perspective view,
- Figure 7: shows a suction part of a cleaning module according to one embodiment of the invention,
- Figure 8: shows the cleaning device unit according to one embodiment of the invention shown in Figure 4 in a cleaning situation, and
- Figure 9: shows the cleaning device unit according to one embodiment of the invention schematically in a cleaning situation.

### DETAILED DESCRIPTION OF THE EXAMPLES OF THE FIGURES

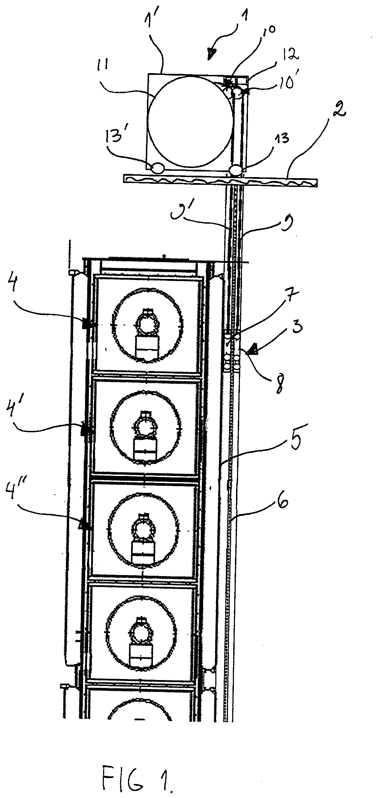

Figure 1 shows a cleaning device unit according to one embodiment of the invention. The base unit 1' of the cleaning device unit 1 is arranged on the roof 2 of the pulp dryer, from where its cleaning module 3 is arranged to clean a filter net 6 surface placed in front of a fan tower's recirculation fans 4, 4', 4" and a heating device 5, such as a steam radiator. The blow part 7 of the cleaning module 3 is arranged to travel in the space between the heating device 5 and the filter net 6, and to blow air through the filter net, away from the heating device. Thus loose matter attached to the filter net 6 is removed and conveyed to the outer surface of the filter net 6. A suction part 8 of the cleaning module 3 is arranged to travel along the outer surface of the filter net 6, which suction part sucks into it loose matter which has passed to the outer surface of the filter net.

The blow part 7 and suction part 8 of the cleaning module 3 are in contact with the base unit via connections 9, 9'. The suction and blow flow needed for the blow part 7 and suction part 8 of the cleaning module 3 are produced through the connections 9, 9'. The base unit 1' is provided with connection guides 10, 10' such as turn wheels or the like for guiding the suction and blow connections 9, 9'. The base unit 1' is also provided with one or more hose reels 11, around which the connections may be arranged when the cleaning device unit 1 is in the transfer position. The base unit is also provided with a cable reel 12 for cable wires (not shown), hanging on which the blow part 7 and suction part 8 of the cleaning module are moved in the vertical direction along the surfaces of the filter net 6. The base unit 1' may be transferred along the roof 2 of the pulp dryer by means of transfer means 13, 13', such as wheels or rollers.

In the situation shown in Figure 1 the blow part 7 and suction part 8 of the cleaning module 3 are arranged aligned with each other on different sides of the filter net 6. The blow part 7 and the suction part 8 are however freely movable in relation to each other, i.e. there is no fixed connection between them.

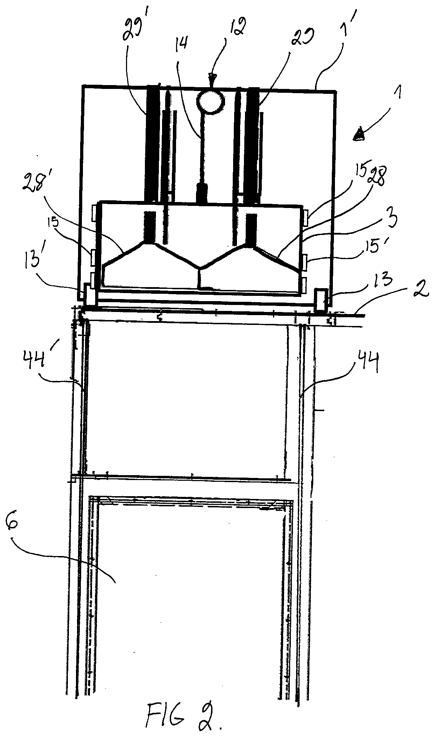

Figure 2 shows a cleaning device unit according to one embodiment of the invention seen from the front. The cleaning device unit 1 is arranged on the roof 2 of a pulp dryer in a corresponding manner to Figure 1. In the situation of Figure 2 the cleaning device unit 1 is in the transfer position, i.e. the cleaning module 3 is arranged in contact with the base unit 1' of the cleaning device unit 1. The movement means 14 arranged in the cleaning module 3, such as a hoisting cable wire, is mainly reeled around the cable reel 12. The suction part of the cleaning module 3 comprises two adjacently arranged suction nozzles 28, 28', both of which have their own suction connection 29, 29'. Guiding means 44, 44', such as rails, groove guides or the like, have been arranged on the edges of the filter net to be cleaned, along which the guide members 15, 15' arranged in the side edges of the cleaning module 3 may travel in a cleaning situation.

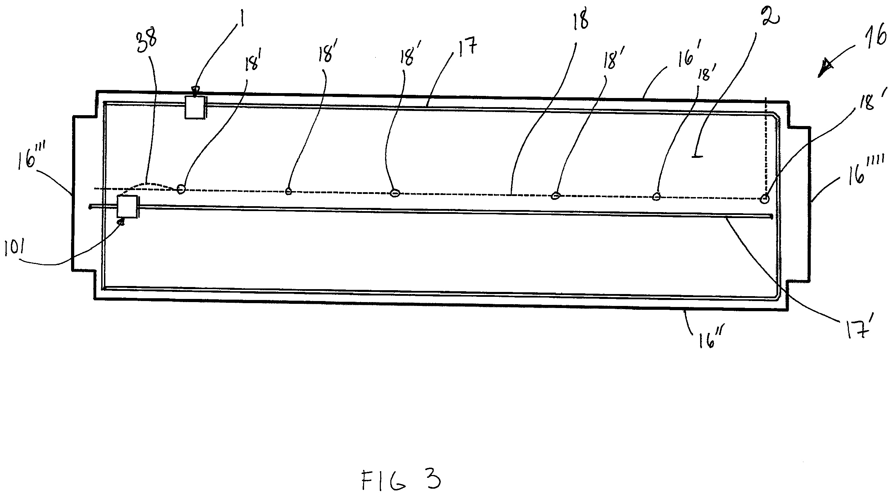

Figure 3 shows other embodiments according to the invention seen from above. In the first alternative a continuous and unending transfer guide 17, such as rails, has been arranged on the roof 2 of the pulp dryer 16, which transfer guide completely skirts around the pulp dryer 16, connecting the edge 16' on the drive side of the pulp dryer 16 to the edge 16" on its maintenance side. The cleaning device unit 1 is arranged to travel along the transfer guides 17, so that when it arrives at the filter net of the fan tower, it stops/is stopped to perform the cleaning procedure of the filter surface. The cleaning module of the cleaning device unit is lowered along the filter surface to be cleaned, and the filter surface is cleaned by blowing and/or sucking loose matter from it.

In the second alternative shown in Figure 3 a transfer guide 17' has been arranged on the roof 2 of the pulp dryer 16, in the middle of the roof, by means of which transfer guide the cleaning device unit 101 may be transferred between the edge 16'" in the wet end of the pulp dryer 16 and the edge 16"" in the dry end. In this case the cleaning module of the cleaning device unit 101 must be manually transferred to fan towers situated in the edge 16' on the drive side of the pulp dryer 16 and/or the edge 16" on the maintenance side for cleaning their filter nets. Alternatively the cleaning module of the cleaning device unit may move freely along its own determined track or path, regardless of the base unit of the cleaning device unit. The cleaning device unit 101 is connected to a fixed suction system 18 of a central vacuum cleaner of the pulp mill with a suction contact 38 in separate suction points 18'.

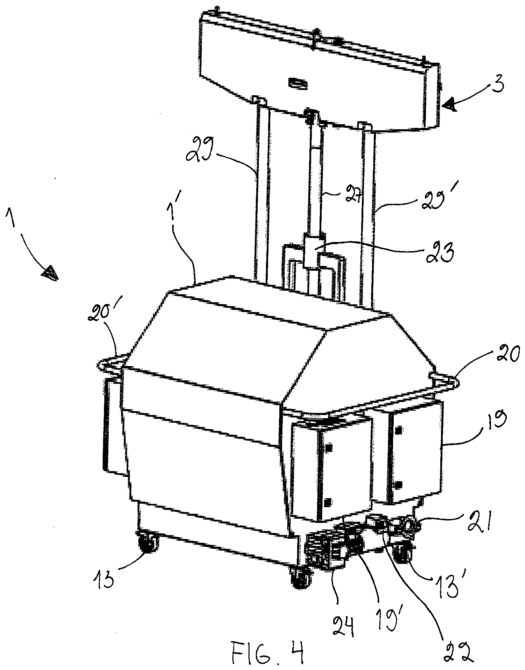

Figure 4 shows a cleaning device unit according to one embodiment of the invention as a perspective view. The cleaning device unit 1 is intended for cleaning filter surfaces from the lower part of the pulp dryer. The cleaning device unit 1 comprises a base unit 1' and a cleaning module 3. The cleaning module 3 comprises a suction and a blow part. Suction connections 29, 29', such as suction hoses, lead to the suction part of the cleaning module 3. A supply air connection 27, such as a blow hose, leads to the blow part of the cleaning module 3. The cleaning device unit is also provided with a lifting accessory 23 for facilitating the lifting of the cleaning module 3 onto fixed guides (not shown).

The base unit of the cleaning device unit 1 is provided with control module units 19, 19', by means of which the operations of the cleaning device unit may be controlled and managed. The control module units 19, 19' may be provided with necessary control operations for the hose reels, and control operations for the transfer means 13, 13'. The control module units 19, 19' can thus manage the moving of the cleaning module 3 along the filter surface to be cleaned and the moving of the cleaning device unit 1 from one fan tower to the next.

Push members 20, 20' have also been arranged in the outer casing of the base unit 1' of the cleaning device unit 1, by means of which push members the cleaning device unit 1 may be moved manually from one fan tower to the next. A suction interface 21 is also arranged on the side of the base unit 1' for connecting the cleaning device unit 1 to the mill's fixed central vacuum system. In a corresponding manner a supply air connection may be arranged in the base unit 1' for connecting the cleaning device unit for example to the mill's compressed air system. An electrical interface 22 is also arranged on the side of the base unit.

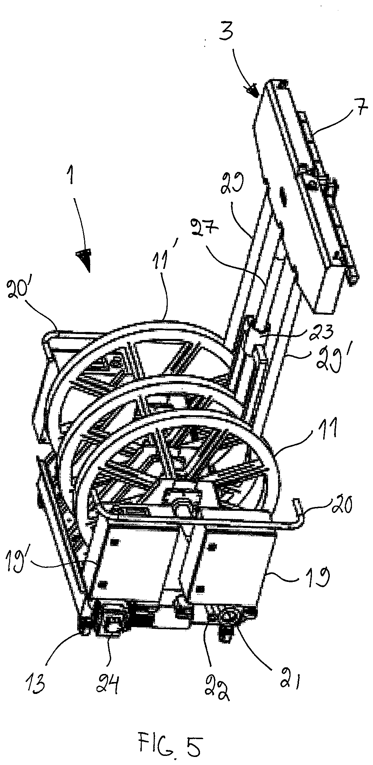

Figure 5 shows the cleaning device unit according to the embodiment shown in Figure 4 without the outer casing. The suction connections 29, 29' are arranged to be wound onto the hose reels 11, 11'. A drive motor 24 and switch means for the hose reels 11, 11' are also arranged in the cleaning device unit 1. With the aid of the drive motor and the switch means the rotating speed of the reels 11, 11' during the reeling off and reeling in, and thus the tightness of the suction and supply air connections 29, 29', 27 are managed via the cardan axle.

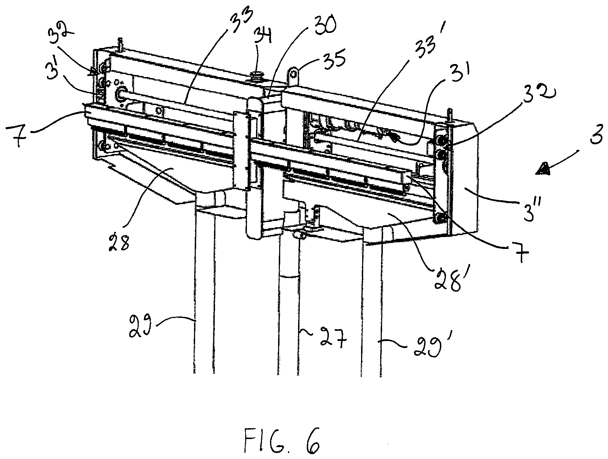

Figure 6 shows the cleaning module of a cleaning device unit according to one embodiment of the invention. The cleaning module 3 comprises a blow part 7 and a suction part, which comprises two adjacent suction nozzles 28, 28'. The blow part is provided with a supply air connection 27 and both suction nozzles 28, 28' are provided with a separate suction connection 29, 29'. The blow part 7 and the suction part are attached to each other in a fixed manner with a connection piece 30.

In the embodiment shown in Figure 6 the cleaning module 3 is provided with a power source 31, such as a motor. The power source 31 operates the movement means 32, such as cogged gears or wheels, arranged in the side edges 3', 3" of the cleaning module 3. The movement means 32 are arranged to travel along guiding means arranged in contact with the filter surface, in which guiding means the movement means may be fitted. The power is transmitted from the power source 31 to the movement means by means of the cardan axles 33, 33'. The cleaning module 3 is also provided with a manual emergency stop button 34, by means of which the power source 31 may be turned off if necessary. The cleaning module 3 also has an anchor loop 35 for moving the cleaning module 3 along the filter surface for example by means of a cable wire, if a malfunction should occur in the power source 31.

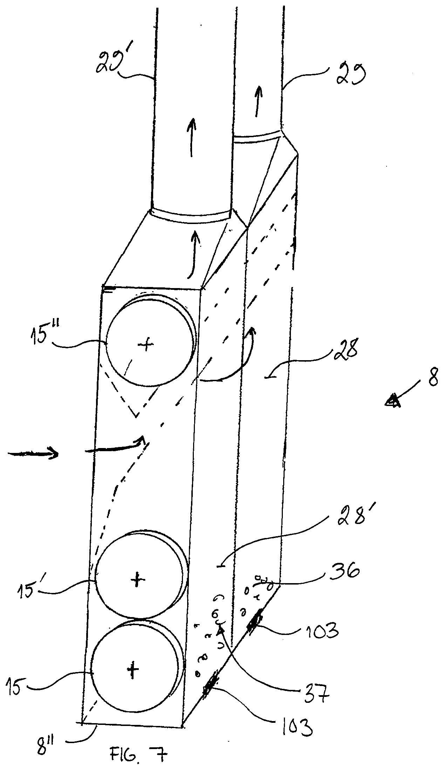

Figure 7 shows the suction part of a cleaning module according to one embodiment of the invention. The suction part 8 comprises two suction nozzles 28, 28', through the openings of which air and loose matter is sucked into the suction part and further into the suction connections 29, 29'. The shape of the nozzle openings of the suction nozzles of the suction part is shown in Figure 7 with dotted lines and the air flow is illustrated with arrows. Guide members 15, 15', 15" are arranged in the edges of the suction part, which guide members may be arranged to run along the guiding means (not shown) arranged in the edges of the filter surface to be cleaned. The suction part 8 also comprises a waste space 36, where a part of the loose matter 37 is collected. The loose matter 37 may be removed from the waste space 36 through a hinged discharge opening 103, which may be opened and closed, placed in the bottom 8" of the suction part 8. The suction part shown in Figure 7 is especially well suited for use in the solutions shown in Figures 1 and 2.

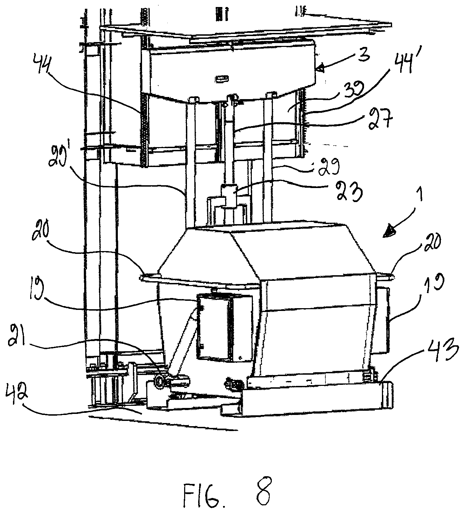

Figure 8 shows the cleaning device unit according to the embodiment shown in Figure 4 in a cleaning situation. The cleaning device unit 1 is arranged to clean the filter surface 39 with the aid of the cleaning module 3. The cleaning module 3 is arranged to travel along fixed guiding means 44, 44', such as cogged guide rails, on the sides of the filter surface. Blow air is led into the cleaning module 3 with the supply air connection 27 and loose matter is removed from the filter surface 39 along the suction connections 29, 29'. The suction connections 29, 29' are connected to the central vacuum system of the mill via the suction connection 21.

The cleaning device unit 1 is in a cleaning situation arranged to be in a correct location in front of the filter surface 39 with the aid of transfer guides 43, such as transfer rails, arranged in the floor 42 of the mill. The cleaning device unit 1 is placed underneath the maintenance space between fan towers.

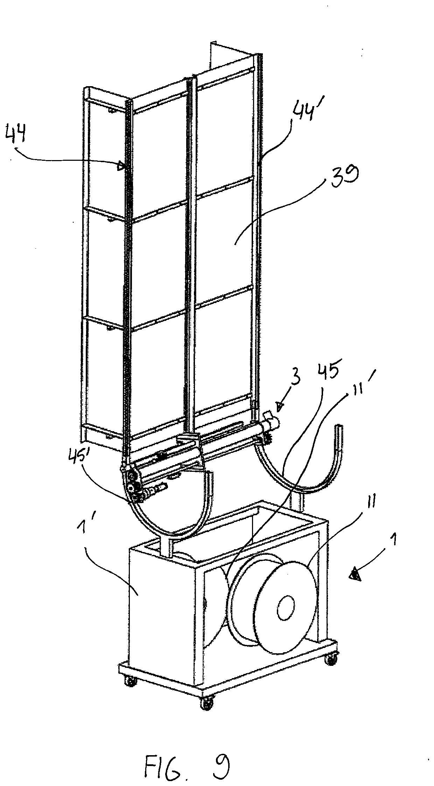

Figure 9 schematically shows a cleaning device unit according to one embodiment of the invention in a cleaning situation. The cleaning device unit 1 is shown very schematically, partly without the outer casing, whereby the hose reels 11, 11' are visible. The cleaning module 3 of the cleaning device unit 1 is also shown very schematically, without protective casings. The purpose of Figure 9 is to illustrate one embodiment, where the base unit 1' is provided with U-shaped guides 45, 45', the ends of which may be fitted into fixed guiding means 44, 44' arranged in contact with adjacent filter surfaces 39. Thus the cleaning module 3 may easily be transferred between two adjacent filter surfaces.

It is apparent to a person skilled in the art that the invention is not limited exclusively to the examples presented above, but that the invention may vary within the scope of the claims presented below. The dependent claims present some possible embodiments of the invention, and they are as such not to be considered to restrict the scope of protection of the invention.

## Claims

1. A cleaning device unit (1, 101) for cleaning a vertically immovable vertical filter surface (39) of a filter net (6) of a pulp dryer's (16) fan tower, which cleaning device unit (1, 101) comprises
- movement means (14) for moving a cleaning module (3) along the immovable filter surface (39), wherein the cleaning module (3) comprises
- a blow part (7), which is arranged to blow air to the filter surface (39) to be cleaned, and
- a suction part (8), which is arranged in horizontal direction at a distance from the blow part (7), and which suction part (8) is arranged to suck air from the filter surface (39) to be cleaned,
where the blow part is arranged to blow through the filter net towards the suction part **characterised in that** the cleaning device unit (1, 101) comprises a movable encased base unit (1'), into which is arranged one or more of the following:
- a suction device,
- a blow device,
- at least one hose reel (11, 11') for suction and/or supply air connections (29, 29', 27), which are to be arranged in contact with the cleaning module (3),
- a power source (31), such as a motor, for moving the cleaning module (3) along the filter surface (39) to be cleaned,
- a waste space (36), preferably arranged inside the hose reel (11, 11'),
- connection guides, by means of which the suction and/or supply air connections (29, 29', 27) are arranged around the hose reel (11, 11'), and/or
- a cable reel (12),
wherein the cleaning device unit (1, 101) comprises transfer means (13, 13') arranged in connection with the base unit (1') for moving the cleaning device unit (1, 101) from one fan tower to a second fan tower.

2. The cleaning device unit according to claim 1, **characterised in that** the suction part (8) of the cleaning module (3) comprises one or several adjacent suction nozzles (28, 28'), which are arranged into a contact with a suction system with a suction connection/connections (29, 29').

3. The cleaning device unit (1, 101) according to claim 1 or 2, **characterised in that** a shredding member is arranged inside the suction part (8) of the cleaning module (3), for example a cogged rotating blade wheel functioning as a shredding fan, for intensifying the air flow and for breaking up sucked large loose matter agglomerates.

4. The cleaning device unit (1, 101) according to any of the claims 1-3, **characterised in that** the blow part (7) of the cleaning module (3) comprises one or several adjacent blow nozzles, which are arranged into a contact with a supply air system with a supply air connection/connections (27).

5. The cleaning device unit according to claim 4, **characterised in that** the blow nozzle/nozzles of the blow part (7) are arranged to be turnable.

6. The cleaning device unit (1, 101) according to claim 1, **characterised in that** the distance between the blow part (7) and the suction part (8) in the cleaning module (3) is 10-110 mm, more typically 10-70 mm.

7. The cleaning device unit (1, 101) according to claim 1, **characterised in that** the movement means (14) of the cleaning module (3) comprise at least one cable wire member.

8. The cleaning device unit (1, 101) according to claim 1, **characterised in that** the blow part (7) and suction part (8) of the cleaning module (3) are arranged in fixed contact with each other, so that the suction part (8) and blow part (7) are arranged opposite and parallel at a distance from each other and attached to each other.

9. A pulp dryer (16), which comprises
- an actual drying section, in which a pulp web is arranged to be dried with hot air blows or the like,
- at least one fan tower arranged adjacent to the actual drying section, which fan tower comprises
- at least one fan (4, 4', 4"), which is arranged to remove moist air from the drying section of the pulp dryer (16) and to blow heated air into the drying section of the pulp dryer (16),
- at least one heating device (5), such as a heat exchanger, a steam radiator or the like, which is arranged on the suction side of said fan (4, 4', 4"),
- an immovable filter surface (39), which is formed from filter net (6) or the like arranged on the side of the heating device (5) which faces away from the fan (4, 4', 4"), for protecting the heating device (5) and for filtering the air to be heated before it is led to the heating device (5),
**characterised in that** the pulp dryer (16) comprises a cleaning device unit (1, 101) according to any of the claims 1-8.

10. The pulp dryer (16) according to claim 9, **characterised in that** it comprises at least a first and a second, preferably several, adjacent fan towers and transfer guides (17), such as transfer rails, along which the cleaning device unit (1, 101) is transferrable from the first fan tower to the second fan tower.

11. The pulp dryer (16) according to claim 10, **characterised in that** the transfer guides (17), such as the transfer rails, are arranged on the upper surface, i.e. roof (2), of the pulp dryer (16).

## Patentansprüche

1. Reinigungsvorrichtungseinheit (1, 101) zum Reinigen einer vertikal unbeweglichen vertikalen Filteroberfläche (39) eines Filternetzes (6) eines Lüfterturms eines Zellstofftrockners (16), welche Reinigungsvorrichtungseinheit (1, 101) umfasst:
- Bewegungsmittel (14) zum Bewegen eines Reinigungsmoduls (3) entlang der unbeweglichen Filteroberfläche (39),
worin das Reinigungsmodul (3) umfasst:
- einen Blasteil (7), welcher angeordnet ist, um Luft zur zu reinigenden Filteroberfläche (39) zu blasen, und
- einen Saugteil (8), welcher in horizontaler Richtung in einer Entfernung vom Blasteil (7) angeordnet ist, und welcher Saugteil (8) angeordnet ist, um Luft von der zu reinigenden Filteroberfläche (39) zu saugen,
wo der Blasteil angeordnet ist, um durch das Filternetz zum Saugteil hin zu blasen, **dadurch gekennzeichnet, dass** die Reinigungsvorrichtungseinheit (1, 101) eine bewegliche umhüllte Grundeinheit (1') umfasst, in welche eines oder mehrere der folgenden angeordnet sind:
- eine Saugvorrichtung,
- eine Blasvorrichtung,
- mindestens eine Schlauchtrommel (11, 11') für Ansaug- und/oder Zuluftverbindungen (29, 29', 27), welche in Kontakt mit dem Reinigungsmodul (3) anzuordnen sind,
- eine Energiequelle (31) wie ein Motor zum Bewegen des Reinigungsmoduls (3) entlang der zu reinigenden Filteroberfläche (39),
- ein Abfallraum (36) vorzugsweise innerhalb der Schlauchtrommel (11, 11') angeordnet,
- Verbindungsführungen, durch welche die Ansaug- und/oder Zuluftverbindungen (29, 29', 27) um die Schlauchtrommel (11, 11') herum angeordnet werden, und/oder
- eine Kabeltrommel (12),
worin die Reinigungsvorrichtungseinheit (1, 101) Übertragungsmittel (13, 13') umfasst, angeordnet in Verbindung mit der Grundeinheit (1'), um die Reinigungsvorrichtungseinheit (1, 101) von einem Lüfterturm zu einem zweiten Lüfterturm zu bewegen.

2. Reinigungsvorrichtungseinheit gemäß Anspruch 1, **dadurch gekennzeichnet, dass** der Saugteil (8) des Reinigungsmoduls (3) eine oder mehrere benachbarte Saugdüsen (28, 28') umfasst, welche in einem Kontakt mit einem Saugsystem mit einer Saugverbindung/- verbindungen (29, 29') angeordnet sind.

3. Reinigungsvorrichtungseinheit (1, 101) gemäß Anspruch 1 oder 2, **dadurch gekennzeichnet, dass** ein Zerkleinerungsglied innerhalb des Saugteils (8) des Reinigungsmoduls (3) angeordnet ist, zum Beispiel ein gezahntes, rotierendes Klingenrad, welches als Zerkleinerungsventilator fungiert, um den Luftstrom zu intensivieren und um angesaugte große lose Substanzagglomerate aufzubrechen.

4. Reinigungsvorrichtungseinheit (1, 101) gemäß einem der Ansprüche 1-3, **dadurch gekennzeichnet, dass** der Blasteil (7) des Reinigungsmoduls (3) eine oder mehrere benachbarte Blasdüsen umfasst, welche in einem Kontakt mit einem Zuluftsystem mit einer Zuluftverbindung/-verbindungen (27) angeordnet sind.

5. Reinigungsvorrichtungseinheit gemäß Anspruch 4, **dadurch gekennzeichnet, dass** die Blasdüse/-düsen des Blasteils (7) drehbar angeordnet sind.

6. Reinigungsvorrichtungseinheit (1, 101) gemäß Anspruch 1, **dadurch gekennzeichnet, dass** die Entfernung zwischen dem Blasteil (7) und dem Saugteil (8) im Reinigungsmodul (3) 10-110 mm, typischer 10-70 mm ist.

7. Reinigungsvorrichtungseinheit (1, 101) gemäß Anspruch 1, **dadurch gekennzeichnet, dass** die Bewegungsmittel (14) des Reinigungsmoduls (3) mindestens ein Kabeldrahtglied umfassen.

8. Reinigungsvorrichtungseinheit (1, 101) gemäß Anspruch 1, **dadurch gekennzeichnet, dass** der Blasteil (7) und Saugteil (8) des Reinigungsmoduls (3) in festem Kontakt miteinander angeordnet sind, sodass der Saugteil (8) und Blasteil (7) gegenüberliegend und parallel bei einer Entfernung voneinander und verbunden miteinander angeordnet sind.

9. Zellstofftrockner (16), welcher umfasst
- einen tatsächlichen Trocknungsabschnitt, in welchem eine Zellstoffbahn angeordnet ist, um mit heißen Luftstößen oder ähnlichem getrocknet zu werden,
- mindestens einen Lüfterturm, angeordnet angrenzend an den tatsächlichen Trocknungsabschnitt, welcher Lüfterturm umfasst:
- mindestens einen Lüfter (4, 4', 4"), welcher angeordnet ist, um feuchte Luft aus dem Trocknungsabschnitt des Zellstofftrockners (16) zu entfernen, und erhitzte Luft in den Trocknungsabschnitt des Zellstofftrockners (16) zu blasen,
- mindestens eine Heizvorrichtung (5) wie einen Wärmetauscher, einen Dampfheizkörper oder Ähnliches, welche an der Saugseite des besagten Lüfters (4, 4', 4") angeordnet ist,
- eine unbewegliche Filteroberfläche (39), welche aus Filternetz (6) oder Ähnlichem gebildet ist, angeordnet an der Seite der Heizvorrichtung (5), welche vom Lüfter (4, 4', 4") abgewandt ist, um die Heizvorrichtung (5) zu schützen, und um die zu erwärmende Luft zu filtern, bevor sie zur Heizvorrichtung (5) geleitet wird,
**dadurch gekennzeichnet, dass** der Zellstofftrockner (16) eine Reinigungsvorrichtungseinheit (1, 101) gemäß einem der Ansprüche 1-8 umfasst.

10. Zellstofftrockner (16) gemäß Anspruch 9, **dadurch gekennzeichnet, dass** er mindestens einen ersten und einen zweiten, vorzugsweise mehrere aneinander grenzende Lüftertürme und Übertragungsführungen (17) wie Übertragungsschienen umfasst, entlang welchen die Reinigungsvorrichtungseinheit (1, 101) vom ersten Lüfterturm zum zweiten Lüfterturm übertragbar ist.

11. Zellstofftrockner (16) gemäß Anspruch 10, **dadurch gekennzeichnet, dass** die Transferführungen (17) wie die Transferschienen an der oberen Oberfläche, also dem Dach (2) des Zellstofftrockners (16) angeordnet sind.

## Revendications

1. Unité de dispositif de nettoyage (1, 101) pour nettoyer une surface de filtre verticale (39) verticalement immobile d'un filet de filtration (6) d'une tour de ventilation de sécheur de pâte (16), laquelle unité de dispositif de nettoyage (1, 101) comprend :
un moyen de déplacement (14) pour déplacer un module de nettoyage (3) le long de la surface de filtre (39) immobile,
dans laquelle le module de nettoyage (3) comprend :
une partie de soufflage (7) qui est agencée pour souffler l'air vers la surface de filtre (39) à nettoyer, et
une partie d'aspiration (8) qui est agencée dans la direction horizontale à une distance de la partie de soufflage (7), et laquelle partie d'aspiration (8) est agencée pour aspirer l'air de la surface de filtre (39) à nettoyer,
où la partie de soufflage est agencée pour souffler à travers le filet de filtration vers la partie d'aspiration, **caractérisée en ce que** :
l'unité de dispositif de nettoyage (1, 101) comprend une unité de base enfermée mobile (1'), dans laquelle est agencé un ou plusieurs éléments suivants :
un dispositif d'aspiration,
un dispositif de soufflage,
au moins une bobine de tuyau flexible (11, 11') pour des raccordements d'air d'aspiration et/ou d'alimentation (29, 29', 27) qui doivent être agencés en contact avec le module de nettoyage (3),
une source de puissance (31) telle qu'un moteur, pour déplacer le module de nettoyage (3) le long de la surface de filtre (39) à nettoyer,
un espace perdu (36), de préférence agencé à l'intérieur de la bobine de tuyau flexible (11, 11'),
des guides de raccordement au moyen desquels les raccordements d'air d'aspiration et/ou d'alimentation (29, 29', 27) sont agencés autour de la bobine de tuyau flexible (11, 11'), et/ou
une bobine de câble (12),
dans laquelle l'unité de dispositif de nettoyage (1, 101) comprend des moyens de transfert (13, 13') agencés conjointement avec l'unité de base (1') pour déplacer l'unité de dispositif de nettoyage (1, 101) d'une tour de ventilation à une seconde tour de ventilation.

2. Unité de dispositif de nettoyage selon la revendication 1, **caractérisée en ce que** la partie d'aspiration (8) du module de nettoyage (3) comprend une ou plusieurs buses d'aspiration (28, 28') adjacentes qui sont agencées en contact avec un système d'aspiration avec un raccordement/des raccordements d'aspiration (29, 29').

3. Unité de dispositif de nettoyage (1, 101) selon la revendication 1 ou 2, **caractérisée en ce qu'**un élément de déchiquetage est agencé à l'intérieur de la partie d'aspiration (8) du module de nettoyage (3), par exemple une roue dentée de lame rotative fonctionnant comme un ventilateur de déchiquetage, pour intensifier l'écoulement d'air et pour casser des aggloméras de grosse matière en vrac aspirés.

4. Unité de dispositif de nettoyage (1, 101) selon l'une quelconque des revendications 1 à 3, **caractérisée en ce que** la partie d'aspiration (7) du module de nettoyage (3) comprend une ou plusieurs buses de soufflage adjacentes, qui sont agencées en contact avec un système d'air d'alimentation avec un raccordement/des raccordements d'air d'alimentation (27).

5. Unité de dispositif de nettoyage selon la revendication 4, **caractérisée en ce que** la buse/les buses de soufflage de la partie de soufflage (7) sont agencées afin de pouvoir tourner.

6. Unité de dispositif de nettoyage (1, 101) selon la revendication 1, **caractérisée en ce que** la distance entre la partie de soufflage (7) et la partie d'aspiration (8) dans le module de nettoyage (3) est de 10 à 110 mm, plus typiquement de 10 à 70 mm.

7. Unité de dispositif de nettoyage (1, 101) selon la revendication 1, **caractérisée en ce que** les moyens de déplacement (14) du module de nettoyage (3) comprennent au moins un élément de fil de câble.

8. Unité de dispositif de nettoyage (1, 101) selon la revendication 1, **caractérisée en ce que** la partie de soufflage (7) et la partie d'aspiration (8) du module de nettoyage (3) sont agencées en contact fixe entre elles, de sorte que la partie d'aspiration (8) et la partie de soufflage (7) sont agencées de manière opposée et parallèle à une certaine distance l'une de l'autre et fixées entre elles.

9. Sécheur de pâte (16) qui comprend :
une véritable section de séchage, dans laquelle on agence un matelas de pâte pour être séché avec des jets d'air chaud ou similaires,
au moins un tour de ventilation agencée de manière adjacente à la véritable section de séchage, laquelle tour de ventilation comprend :
au moins un ventilateur (4, 4', 4") qui est agencé pour extraire l'air humide de la section de séchage du sécheur de pâte (16) et pour souffler l'air chauffé dans la section de séchage du sécheur de pâte (16),
au moins un dispositif de chauffage (5) tel qu'un échangeur de chaleur, un radiateur de vapeur ou similaire, qui est agencé du côté de l'aspiration dudit ventilateur (4, 4', 4"),
une surface de filtre immobile (39) qui est formée à partir d'un filet de filtration (6) ou similaire, agencée sur le côté du dispositif de chauffage (5) qui est orienté à l'opposé du ventilateur (4, 4', 4" ) pour protéger le dispositif de chauffage (5) et pour filtrer l'air à chauffer avant qu'il ne soit amené au dispositif de chauffage (5),
**caractérisé en ce que** le sécheur de pâte (16) comprend une unité de dispositif de nettoyage (1, 101) selon l'une quelconque des revendications 1 à 8.

10. Sécheur de pâte (16) selon la revendication 9, **caractérisé en ce qu'**il comprend au moins une première et une seconde, de préférence plusieurs tours de ventilation adjacentes et guides de transfert (17), tels que des rails de transfert, le long desquels l'unité de dispositif de nettoyage (1, 101) peut être transférée de la première tour de ventilation à la seconde tour de ventilation.

11. Sécher de pâte (16) selon la revendication 10, **caractérisé en ce que** les guides de transfert (17) tels que les rails de transfert, sont agencés sur la surface supérieure, c'est-à-dire le toit (2), du sécheur de pâte (16).
